# EUROPEAN PATENT APPLICATION

(11) **EP 4 693 948 A1**
(43) Date of publication of application: **11.02.2026**
(21) Application number: 24791657.0
(22) Date of filing: 03.01.2024
(51) Int. Cl.: H04B 10/079

(54) **FAULT LOCATION METHOD AND APPARATUS FOR OPTICAL FIBER**

(30) Priority: 21.04.2023 CN 202310469348
(71) Applicant: Huawei Technologies Co., Ltd., Shenzhen, Guangdong 518129 (CN)
(72) Inventor: SHEN, Heng, Shenzhen, Guangdong 518129 (CN); HONG, Ning, Shenzhen, Guangdong 518129 (CN); ZHANG, Junbo, Shenzhen, Guangdong 518129 (CN); WANG, Yantao, Shenzhen, Guangdong 518129 (CN); YAO, Weichao, Shenzhen, Guangdong 518129 (CN)
(74) Representative: Goddar, Heinz J.
(86) International application number: PCT/CN2024/070379
(87) International publication number: WO 2024/217069

(57) **Abstract**

An optical fiber fault location method and apparatus are disclosed, and relate to the field of optical communication technologies. A management device may determine a faulty logical fiber in an optical network based on fiber cut alarm information of the optical network. Further, the management device determines, based on an optical fiber mapping relationship of the optical network, a faulty optical fiber associated with the faulty logical fiber, obtains a fault physical location of a fault point in the faulty optical fiber, and outputs the fault physical location. In this way, a process of manually checking a drawing based on the faulty logical fiber to determine the faulty optical fiber corresponding to the faulty logical fiber is avoided, and a process of manually detecting the physical location of the fault point in the faulty optical fiber on site is avoided. This helps improve optical fiber fault location efficiency in the optical network, and reduce fault recovery time of the optical network.

## Description

This application claims priority to Chinese Patent Application No. 202310469348.4, filed with the China National Intellectual Property Administration on April 21, 2023 and entitled " OPTICAL FIBER FAULT LOCATION METHOD AND APPARATUS", which is incorporated herein by reference in its entirety.

### TECHNICAL FIELD

This application relates to the field of optical communication technologies, and in particular, to an optical fiber fault location method and apparatus.

### BACKGROUND

An optical network (optical network, ON) is a wide area network, a metropolitan area network, or a newly built large-scale local area network that uses an optical transmission medium for data communication. For example, the optical transmission medium is an optical fiber. A logical optical fiber (which is referred to as a "logical fiber" in the following) in the optical network is determined by modeling the optical fiber in the optical network. The logical fiber indicates a transmission link between a source network device and a destination network device that are to communicate with each other in the optical network. In a data communication process of the optical network, a problem of an optical fiber fault inevitably occurs. Usually, a physical location of a faulty optical fiber is determined after the logical optical fiber and pipe cabling are manually checked per segment. However, the pipe cabling and a burying location of the optical fiber are complex. As a result, efficiency of manually locating and repairing the faulty optical fiber is reduced.

### SUMMARY

This application provides an optical fiber fault location method and apparatus, to resolve a problem of low efficiency of manually locating and repairing a faulty optical fiber.

According to a first aspect, this application provides an optical fiber fault location method. The method is performed by a management device. An example in which the method is applied to an optical network is used for description. The management device determines a faulty logical fiber in a plurality of logical fibers based on fiber cut alarm information, determines a faulty optical fiber based on an optical fiber mapping relationship and the faulty logical fiber, and obtains a fault physical location of a fault point in the faulty optical fiber based on ranging information. The optical fiber mapping relationship includes an association relationship between the plurality of logical fibers and a plurality of pre-buried optical fibers. The foregoing faulty optical fiber is an optical fiber that is in the plurality of optical fibers and that is associated with the faulty logical fiber, and the ranging information indicates a relative location of the fault point in the faulty optical fiber. Further, the management device outputs optical fiber fault information of an optical network, where the optical fiber fault information includes at least one of the fault physical location and the faulty optical fiber.

The management device may determine a faulty logical optical fiber (which is referred to as a "faulty logical fiber in the following") from an optical network based on the fiber cut alarm information of the optical network. In this way, after determining the faulty optical fiber based on optical fiber mapping of the optical network and the faulty logical fiber, the management device outputs the fault physical location of the fault point in the faulty optical fiber. In this way, a process of manually checking a drawing based on the faulty logical fiber to determine the faulty optical fiber corresponding to the faulty logical fiber is avoided, and a process of manually detecting the physical location of the faulty optical fiber on site is avoided. This helps improve optical fiber fault location efficiency in the optical network, and reduce fault recovery time of the optical network.

The following provides two possible examples for outputting the optical fiber fault information of the optical network by the management device.

In a first possible example, the management device displays a geographic information map. The geographic information map includes the fault physical location, and an identifier of the fault physical location indicates the fault point in the faulty optical fiber.

In a second possible example, the management device displays a faulty optical fiber list. The faulty optical fiber list includes at least one of link information of the faulty optical fiber and the fault physical location, and the link information indicates the fault physical location.

The management device displays a physical location of the fault point in a visualized manner, to accurately indicate a user to quickly repair the fault point of the faulty optical fiber, so as to avoid a delay caused by manual checking of the faulty optical fiber. This helps improve fault recovery efficiency of the optical network and improve communication stability of the optical network.

In an optional implementation, locations of a plurality of pre-buried optical fibers are determined based on physical fiber/cable information. For example, the physical fiber/cable information includes at least one or a combination of coordinate information of each optical fiber in a plurality of pre-buried optical fibers, a pipeline form, a segmented fiber/cable length, a coiled fiber length, and a turning point location, and the coordinate information includes source coordinates and sink coordinates of each optical fiber.

For example, before the management device obtains the fault physical location, the fault location method provided in this application further includes: The management device obtains the physical fiber/cable information of the optical network; and the management device generates physical routes of a plurality of optical fibers based on the physical fiber/cable information, and establishes an optical fiber mapping relationship between the physical routes of the plurality of optical fibers and the plurality of logical fibers according to a preset rule.

The management device establishes an optical fiber mapping relationship between each optical fiber and a logical fiber, to implement digital management of a physical fiber/cable in the optical network, and avoid a process of manually checking a drawing based on a faulty logical fiber to determine a faulty optical fiber corresponding to the faulty logical fiber. This helps improve optical fiber fault location efficiency.

In an optional implementation, the fiber mapping relationship indicates a reference optical fiber of each of the plurality of logical fibers. The plurality of pre-buried optical fibers include the reference optical fiber of each logical fiber, the reference optical fiber of each logical fiber is one of at least one candidate optical fiber determined based on a length of each logical fiber and the physical fiber/cable information, and a difference between the length of each logical fiber and a length of the at least one candidate optical fiber is less than or equal to a specified threshold.

For example, the preset rule may include: The management device selects the reference optical fiber for each logical fiber based on distance similarity between a logical fiber and an optical fiber.

For example, for each logical fiber in the plurality of logical fibers, the management device obtains at least one candidate optical fiber of each logical fiber based on the physical routes of the plurality of optical fibers, and selects, from the at least one candidate optical fiber as the reference optical fiber of each logical fiber, a candidate optical fiber that matches each logical fiber; and the management device establishes an optical fiber mapping relationship between the plurality of logical fibers and reference optical fibers of the logical fibers. A difference between a length of the at least one candidate optical fiber and a length of each logical fiber is less than or equal to a specified threshold.

In this example, the management device performs ranging through a physical fiber/cable, and then recommends a binding relationship between a logical optical fiber and a physical optical fiber based on distance similarity. The binding relationship may refer to a physical optical fiber corresponding to each logical optical fiber. Therefore, the management device establishes the optical fiber mapping relationship between a logical fiber and a physical optical fiber based on a selected reference optical fiber, to implement digital management of the physical fiber/cable in the optical network. This helps the management device quickly determine, based on the optical fiber mapping relationship, a faulty optical fiber corresponding to a faulty logical fiber, and improves optical fiber fault location efficiency.

In an optional implementation, the optical network includes one or more optical time-domain reflectometer (optical time-domain reflectometer, OTDR) modules, and each OTDR module is configured to detect a relative distance between a fault point and each OTDR module. A location of the faulty optical fiber, a location of the OTDR module, and the relative distance detected by the OTDR module are used to determine the fault physical location of the fault point. The foregoing ranging information includes the relative distance detected by the OTDR module.

Optionally, before the management device determines the faulty logical fiber in the plurality of logical fibers based on the fiber cut alarm information, the fault location method provided in this application further includes: if the management device detects that a fiber cut fault occurs in the optical network, the management device indicates the plurality of OTDR modules to detect one or more relative locations of the faulty logical fiber; and the management device generates the fiber cut alarm information based on the one or more relative locations and location information of the plurality of OTDR modules in the optical network. After detecting that the fiber cut fault occurs in the optical network, the management device may indicate the OTDR module to detect the relative location of the faulty logical fiber, to generate the fiber cut alarm information based on the detected information. This avoids a process of manually querying for a faulty logical fiber, and helps improve efficiency of fault location.

In an optional implementation, that the management device queries for the fault physical location corresponding to the faulty logical fiber based on an optical fiber mapping relationship of the optical network includes: The management device obtains port information of the faulty logical fiber, and queries the optical fiber mapping relationship based on the port information, to determine the faulty optical fiber in the plurality of optical fibers. The port information indicates a port number of a faulty logical fiber and a communication device connected to the faulty logical fiber. In addition, the management device determines the fault physical location of the fault point in the faulty optical fiber from a ground information system (ground information system, GIS) based on the physical fiber/cable information of the optical network.

In a process of determining the physical location of the fault point, the management device may identify the faulty optical fiber based on the port information of the faulty logical fiber. Therefore, the management device determines the fault physical location of the fault point in the faulty optical fiber based on the physical fiber/cable information of the optical network, and implements automatic jumping, to the fault physical location of the fault point, from the faulty logical fiber indicated by a fiber cut alarm. This reduces a process of manual ranging and optical fiber checking, improves efficiency of fault location, helps decrease communication recovery time of the optical network, and improves data communication efficiency of the optical network.

According to a second aspect, this application provides an optical fiber fault location apparatus. For example, the fault location apparatus includes an alarm unit, a location determining unit, and an output unit. The alarm unit is configured to determine a faulty logical fiber in a plurality of logical fibers based on fiber cut alarm information. The location determining unit is configured to: determine a faulty optical fiber based on an optical fiber mapping relationship and the faulty logical fiber, and obtain a fault physical location of a fault point in the faulty optical fiber based on ranging information. The optical fiber mapping relationship includes an association relationship between the plurality of logical fibers and a plurality of pre-buried optical fibers, the faulty optical fiber is an optical fiber that is in the plurality of optical fibers and that is associated with the faulty logical fiber, and the ranging information indicates a relative location of the fault point in the faulty optical fiber. The output unit is configured to output optical fiber fault information of an optical network, where the optical fiber fault information includes at least one of the fault physical location and the faulty optical fiber.

In an optional implementation, the output unit includes: a displaying unit, configured to display a geographic information map, where the geographic information map includes the fault physical location, and an identifier of the fault physical location indicates the fault point in the faulty optical fiber.

Optionally, the displaying unit is further configured to display a faulty optical fiber list, where the faulty optical fiber list includes at least one of the fault physical location and link information of the faulty optical fiber, and the link information indicates the fault physical location.

In an optional implementation, locations of the plurality of optical fibers are determined based on physical fiber/cable information. The physical fiber/cable information includes at least one or a combination of coordinate information of each optical fiber in the plurality of pre-buried optical fibers, a pipeline form, a segmented fiber/cable length, a coiled fiber length, and a turning point location, and the coordinate information includes source coordinates and sink coordinates of each optical fiber.

In an optional implementation, the optical fiber mapping relationship indicates a reference optical fiber of each logical fiber in the plurality of logical fibers. The plurality of optical fibers include the reference optical fiber of each logical fiber, the reference optical fiber of each logical fiber is one of at least one candidate optical fiber determined based on a length of each logical fiber and the physical fiber/cable information, and a difference between the length of each logical fiber and a length of the at least one candidate optical fiber is less than or equal to a specified threshold.

In an optional implementation, the optical network includes an OTDR module. The OTDR module is configured to detect a relative distance between the fault point and the OTDR module. A location of the faulty optical fiber, a location of the OTDR module, and the relative distance are used to determine the fault physical location of the fault point. The foregoing ranging information includes the relative distance detected by the OTDR module.

According to a third aspect, this application provides a management device. The management device includes a memory and a processor. The memory is configured to store computer instructions. The processor is configured to invoke the computer instructions to implement operation steps of the method according to any possible implementation of the first aspect.

For example, the management device may include, but is not limited to, a server, a data center including a plurality of servers, an optical network device configured to implement a function of the management device according to any implementation of the first aspect, and the like.

According to a fourth aspect, this application provides another management device. The management device includes a communication interface and a processor. The communication interface is configured to receive fiber cut alarm information, and the processor is configured to implement, based on the fiber cut alarm information, the operation steps of the method according to any possible implementation of the first aspect.

According to a fifth aspect, this application provides a communication system. The communication system includes: a plurality of pre-buried optical fibers and the management device according to the third aspect, or a plurality of pre-buried optical fibers and the management device according to the fourth aspect.

According to a sixth aspect, this application provides a computer-readable storage medium. The computer-readable storage medium stores a computer program, and when the computer program is executed by a management device, the operation steps of the method according to any possible implementation of the first aspect are implemented.

According to a seventh aspect, this application provides a computer program product. When the computer program product runs on a management device, the management device is enabled to implement the operation steps of the method according to any one of the first aspect or the possible implementations of the first aspect.

For beneficial effect of the second aspect to the seventh aspect, refer to the content in any implementation of the first aspect. Details are not described herein again. In this application, based on implementations according to the foregoing aspects, the implementations may be further combined to provide more implementations.

### BRIEF DESCRIPTION OF DRAWINGS

FIG. 1 is a diagram of an optical communication network according to this application;
FIG. 2 is a diagram of a structure of a management system of an optical network according to this application;
FIG. 3 is a schematic flowchart 1 of an optical fiber fault location method according to this application;
FIG. 4 is a diagram of an optical fiber mapping relationship according to this application;
FIG. 5 is a schematic flowchart 2 of an optical fiber fault location method according to this application;
FIG. 6 is a schematic flowchart 3 of an optical fiber fault location method according to this application;
FIG. 7 is a diagram of displaying optical fiber fault information according to this application;
FIG. 8 is a diagram 1 of a structure of an optical fiber fault location apparatus according to this application;
FIG. 9 is a diagram 2 of a structure of an optical fiber fault location apparatus according to this application; and
FIG. 10 is a diagram of a structure of a management device according to this application.

### DESCRIPTION OF EMBODIMENTS

The technical solutions in this application may be applied to not only an optical communication network, but also a future optical communication network. Terms used in embodiments of this application are only used to explain specific embodiments of this application, but are not intended to limit this application. The following first briefly describes some concepts that may be used in this application.

Network digital twin (network digital twin): The network digital twin includes but is not limited to physical modeling, network indicator modeling, service modeling, and the like of a network device and a network connection, and a related capability like physical and logical observability, visualization and control and management of a related network.

Fiber/cable: The fiber/cable is a physical entity that is connected to a transport device, carries a transport object (for example, user information and network management information), and performs a transport function in an optical network.

Board: The board is an electronic component that can be inserted into a machine frame to provide various uplink or service ports.

Detection module: The detection module includes a chip and an electronic component. When a board detects a fiber cut alarm, the board performs reflection for a fiber/cable to detect a relative location of a fiber cut and reports the location to a network element.

Network element device: The network element device is also referred to as a network unit or network element, and includes a hardware device and software running on the hardware device. The network element is configured to receive fiber cut alarm information and relative location information of a fiber cut that are generated by a board, and report the received information to a management and control unit.

Network management and control unit (network management & control unit): The network management and control unit is a system that is responsible for network operation, management, control, and maintenance functions.

Optical time-domain reflectometer (OTDR): The optical time-domain reflectometer is an instrument that analyzes a measurement curve to learn about performance such as uniformity, defect, break, and connector coupling of an optical fiber. The OTDR can be made based on light backscattering and a Fresnel reverse principle. The OTDR obtains attenuation information by using backscattering light generated when light is propagated in the optical fiber, to locate a fault point in the optical fiber, measure optical fiber attenuation and a connector loss, or learn about loss distribution of the optical fiber along a length.

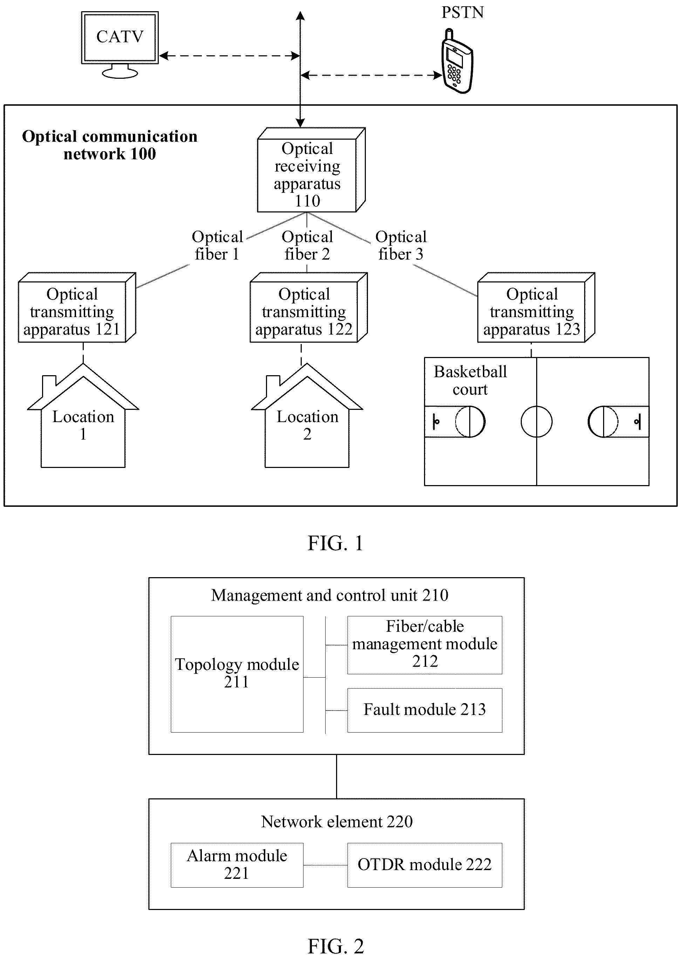

FIG. 1 is a diagram of an optical communication network according to this application. The optical communication network 100 includes an optical receiving apparatus 110 and a plurality of optical transmitting apparatuses, for example, an optical transmitting apparatus 121 to an optical transmitting apparatus 123 in FIG. 1. Different optical transmitting apparatuses may be deployed at different locations. For example, the optical transmitting apparatus 121 is configured to connect a user at a location 1 to the optical communication network, and the optical transmitting apparatus 123 is configured to connect a user on a basketball court to the optical communication network. The optical receiving apparatus and the optical transmitting apparatus may communicate with each other through an optical fiber or another optical transmission medium. For example, the another optical transmission medium may be but is not limited to air, transparent liquid, or another solid medium having an optical transmission function.

The optical communication network 100 may be, but is not limited to, a scenario like a PON, a passive optical local area network (passive optical LAN, POL), an industrial optical network, an in-vehicle optical network, or an Internet of Things. For example, in the PON scenario, the optical transmitting apparatus may be located at a user home or a user corridor, and the optical receiving apparatus may be located in an equipment room of an operator. In the POL scenario, the optical transmitting apparatus and the optical receiving apparatus may be located in a campus (for example, an enterprise or a school). In the industrial optical network scenario, the optical transmitting apparatus and the optical receiving apparatus may be located in an industrial manufacturing workshop. In the in-vehicle optical network scenario, the optical transmitting apparatus and the optical receiving apparatus may be disposed in a vehicle. As an example, in the PON scenario, the optical transmitting apparatus may be an optical network unit (ONU) or an optical network terminal (optical network terminal, ONT), and the optical receiving apparatus may be an optical line terminal (OLT). In the in-vehicle optical network scenario, the optical transmitting apparatus may be a vehicle interface unit (vehicle interface unit, VIU), and the optical receiving apparatus may be a mobile data center (MDC), a vehicle dynamic control (vehicle dynamic control, VDC), or a cockpit data center (cockpit data center, CDC). The technical solutions provided in this application may be further applicable to an optical backbone transmission network, data center optical transmission, short-range optical interconnection, wireless service fronthaul/backhaul, and the like. Specifically, the technical solutions provided in this application may be applied to optical transmitting apparatuses and/or optical receiving apparatuses corresponding to the foregoing different networks. It should be understood that, in some cases, the OLT and the ONU may be collectively referred to as an optical network device, a communication device, or the like.

As shown in FIG. 1, the optical receiving apparatus 110 may further communicate with another communication network, for example, an Internet (internet), a public switched telephone network (Public Switched Telephone Network, PSTN), and a community antenna television (Community Antenna Television, CATV), to implement another communication service. The PSTN is a circuit switched service based on a standard telephone line, and may be used by the optical receiving apparatus 110 to connect to a remote endpoint. Application of the PSTN includes a connection between the remote endpoint and a local area network (Local Area Network, LAN), dialing up of a remote user, and the like. The CATV is used for broadband transmission, which is different from baseband transmission used by another Ethernet physical layer. A broadband cabling system included in the CATV can split a frequency band into different frequency spectra, and then provide different services by using different frequency bands. This technology is widely used in cable television broadcasting. A plurality of television channels are provided on a same cable, and each channel occupies a different frequency band, so that the channels do not interfere with each other.

This application is described by using an example in which the optical communication network 100 is an optical transport network (which is referred to as an "optical network" in the following). As shown in FIG. 2, FIG. 2 is a diagram of a structure of a management system of the optical network according to this application. The management system of the optical network includes a management and control unit 210 and a network element 220. FIG. 2 shows only one network element. It should be understood that the management system of the optical network may alternatively include more network elements. This is not limited in this application.

The management and control unit 210 is responsible for functions such as operation, management, control, and maintenance of the optical network. The management and control unit 210 includes a topology module 211, a fiber/cable management module 212, and a fault module 213.

The topology module 211 is configured to manage a connection relationship of each logical fiber in the optical network.

The fiber/cable management module 212 is configured to: store and manage physical fiber/cable information of the optical network. The physical fiber/cable information includes at least one or a combination of coordinate information of each optical fiber in a plurality of pre-buried optical fibers, a pipeline form, a segmented fiber/cable length, a coiled fiber length, and a turning point location, and the coordinate information includes source coordinates and sink coordinates of each optical fiber. The source coordinates indicate a physical location of a source network device in a unidirectional data transmission process of the optical fiber, and the sink coordinates indicate a physical location of a destination network device in the unidirectional data transmission process of the optical fiber.

The pipeline form indicates a quantity of segments that are obtained by splitting the optical fiber and information such as longitudes and latitudes of two ends of each optical fiber. The segmented fiber/cable length indicates a length of each segment of optical fiber in the optical network. The coiled fiber length indicates a length of the optical fiber coiled in the optical network. The turning point is a connection point of two adjacent segments of optical fiber. For example, the fiber/cable management module 212 may determine locations of a plurality of optical fibers in the optical network based on the physical fiber/cable information.

The fault module 213 is configured to: detect whether a logical fiber in the optical network is faulty, and notify the network element 220 to start an OTDR module 222 when the logical fiber is faulty, to detect a relative location of a fault point at which a fault occurs.

The network element 220 is configured to: receive fiber cut alarm information and relative location information of a fiber cut that are generated by a board, and report the received information to a management and control unit. The network element 220 includes an alarm module 221 and the OTDR module 222.

The alarm module 221 is configured to generate the fiber cut alarm information based on the received relative location information of the fiber cut, where the fiber cut alarm information indicates a logical optical fiber that is faulty (which is referred to as a "faulty logical fiber") in the optical network.

The OTDR module 222 is configured to detect a relative distance between the fault point at which the fault occurs and the OTDR module 222, where the relative distance and a location of the OTDR module 222 are used to determine the relative location of the fault point at which the fault occurs in a faulty optical fiber.

In some possible cases, the management and control unit 210 and the network element 220 may be deployed on a same management device.

In some other possible cases, the management and control unit 210 and the network element 220 are deployed on different management devices. For example, the management and control unit 210 is deployed on one management device, and the network element 220 is deployed on another management device.

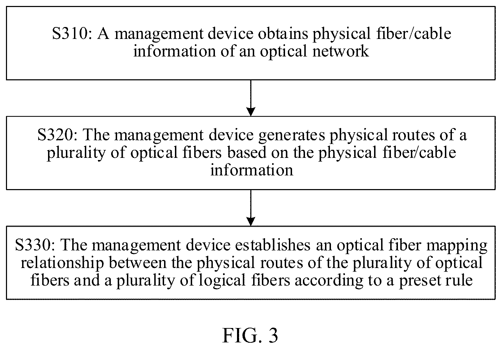

FIG. 2 is merely an example of the management system provided in this embodiment, and should not be construed as a limitation on this application. In this embodiment of this application, an example in which the management device performs an optical fiber fault location method provided in this application is used for description. First, a process of establishing an optical fiber mapping relationship according to this application is described. As shown in FIG. 3, FIG. 3 is a schematic flowchart 1 of an optical fiber fault location method according to this application. The method is performed by a management device, and the management device may be configured to implement a function of the management and control unit 210 or the network element 220 in FIG. 2. The method includes the following steps S310 to S330.

S310: The management device obtains physical fiber/cable information of an optical network.

For the physical fiber/cable information, refer to related descriptions in FIG. 2. Details are not described herein again.

S320: The management device generates physical routes of a plurality of optical fibers based on the physical fiber/cable information.

The physical route may also be referred to as a pipe route of an optical fiber. For example, the management device may determine information such as a distance between devices (or nodes) at two ends of each optical fiber based on a pipe route of each optical fiber.

S330: The management device establishes an optical fiber mapping relationship between the physical routes of the plurality of optical fibers and a plurality of logical fibers according to a preset rule.

The optical fiber mapping relationship includes an association relationship between a plurality of logical fibers and a plurality of pre-buried optical fibers in the optical network. In this embodiment, the management device establishes an optical fiber mapping relationship between each optical fiber and a logical fiber, to implement digital management of a physical fiber/cable in the optical network, and avoid a process of manually checking a drawing based on a faulty logical fiber to determine a faulty optical fiber corresponding to the faulty logical fiber. This helps improve optical fiber fault location efficiency.

For example, the preset rule may include: The management device establishes the optical fiber mapping relationship for the logical fiber and the optical fiber according to a distance similarity principle.

In a possible example, a process in which the management device establishes the optical fiber mapping relationship between the physical routes of the plurality of optical fibers and the plurality of logical fibers may include the following Step 1 and Step 2.

Step 1: For each logical fiber in the plurality of logical fibers of the optical network, the management device obtains at least one candidate optical fiber of each logical fiber based on the physical routes of the plurality of optical fibers, and selects, from the at least one candidate optical fiber as a reference optical fiber of each logical fiber, a candidate optical fiber that matches each logical fiber. A difference between a length of the at least one candidate optical fiber and a length of each logical fiber is less than or equal to a specified threshold.

Step 2: The management device establishes an optical fiber mapping relationship between the plurality of logical fibers and reference optical fibers of the logical fibers.

For example, the management device imports physical fiber/cable information (including information such as a pipeline location and a coiled fiber length) to the management and control unit through manual entering or by importing information into a database. The management and control unit automatically associates a pipeline location of a fiber/cable segment to generate an actual route (physical route) of a physical fiber/cable. Then, the management device binds a logical optical fiber and a physical optical fiber. To help a user implement quick binding, the management and control unit in the management device performs ranging through the physical fiber/cable, and then recommends a binding relationship (namely, an optical fiber mapping relationship) between the logical optical fiber and the physical optical fiber based on a distance similarity. Finally, the management and control unit in the management device stores the binding relationship selected by the user into a fiber/cable management database, to implement digital management of the physical fiber/cable.

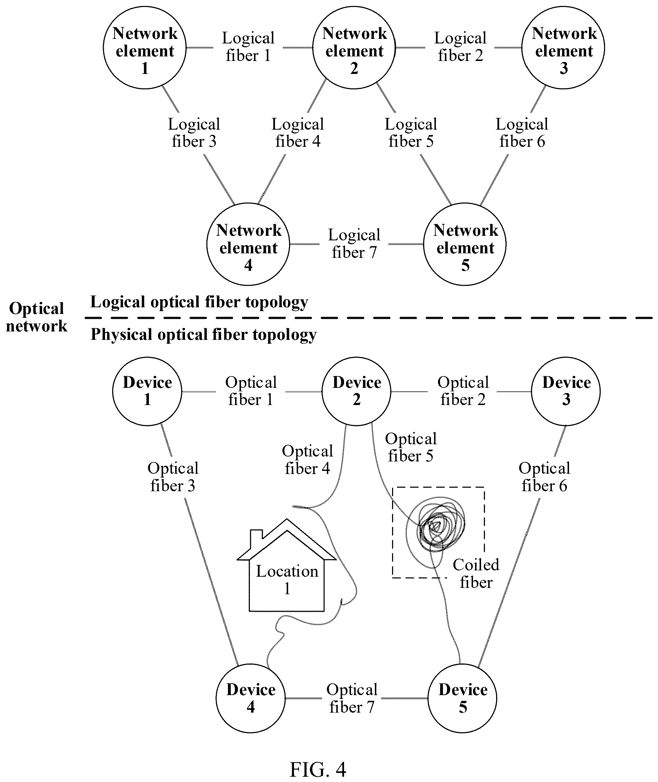

As shown in FIG. 4, FIG. 4 is a diagram of an optical fiber mapping relationship according to this application. An optical network includes a plurality of logical fibers, for example, a logical fiber 1 to a logical fiber 7, and a data transmission function of each logical fiber is supported and implemented through an optical fiber.

There are network elements at two ends of each logical fiber. For example, network elements at two ends of the logical fiber 1 are a network element 1 and a network element 2. A function of each network element is supported and implemented by a communication device. For example, a function of the network element 1 is supported and implemented by a communication device 1 (referred to as a "device 1" in FIG. 4, and another device is not described in detail).

For a possible implementation of the optical fiber mapping relationship, Table 1 shows a possible example.

**Table 1**

| Sequence number of a logical fiber | Port number of a logical fiber | Sequence number of an optical fiber | Management route |
|---|---|---|---|
| Logical fiber 1 | L001 and L002 | Optical fiber 1 | M001 and M002 |
| Logical fiber 2 | L002 and L003 | Optical fiber 2 | M002 and M003 |
| Logical fiber 3 | L001 to L004 | Optical fiber 3 | M001 to M004 |
| Logical fiber 4 | L002 to L004 | Optical fiber 4 | M002 to M004 |
| Logical fiber 5 | L002 to L005 | Optical fiber 5 | M002 to M005 |
| Logical fiber 6 | L003 to L005 | Optical fiber 6 | M003 to M005 |
| Logical fiber 7 | L004 and L005 | Optical fiber 7 | M004 and M005 |

The logical fiber 1 is used as an example for description. A port number of the network element 1 is L001, a port number of the network element 2 is L002, and the logical fiber 1 is associated with the optical fiber 1. Management routes corresponding to the optical fiber 1 include M001 and M002.

For optical fibers associated with the logical fiber 2, the logical fiber 3, the logical fiber 6, and the logical fiber 7, refer to the descriptions of the logical fiber 1. Details are not described herein again.

As shown in FIG. 4, at a physical burying location, a burying path of the optical fiber 4 includes a large quantity of bent paths, and a long segment of optical fiber in a coiled state exists in the optical fiber 5. That is, the optical fiber 4 and the optical fiber 5 are both long. The following separately describes a process of establishing a relationship between the logical fiber 4 and the optical fiber 4 and a process of establishing a relationship between the logical fiber 5 and the optical fiber 5.

For the logical fiber 4, if a length of the optical fiber 4 is close to a sum of lengths of the optical fiber 1 + the optical fiber 3, and a difference between a length of the logical fiber 4 and the length of the optical fiber 4 is less than or equal to a specified threshold (for example, 2 meters, 5 meters, or 10 meters), the two optical fiber paths may be used as candidate optical fibers of the logical fiber 4. Further, a user selects the optical fiber 4 as a reference optical fiber of the logical fiber 4 from two optical fiber paths: the optical fiber 4, and the optical fiber 1 + the optical fiber 3, and establishes an association relationship between the logical fiber 4 and the optical fiber 4.

For the logical fiber 5, if a length of the optical fiber 5 is far greater than a sum of lengths of the optical fiber 1 + the optical fiber 3 + the optical fiber 7, and a difference between a length of the logical fiber 5 and the length of the optical fiber 5 is less than or equal to the specified threshold, the two optical fiber paths may be used as candidate optical fibers of the logical fiber 5. Further, if the user recognizes that an optical fiber path being the optical fiber 1 + the optical fiber 3 + the optical fiber 7 does not match the logical fiber 5, the optical fiber 5 is selected as a reference optical fiber of the logical fiber 5 from the optical fiber path being the optical fiber 4 and the optical fiber path being the optical fiber 1 + the optical fiber 3 + the optical fiber 7, and establishes an association relationship between the logical fiber 5 and the optical fiber 5.

It should be noted that port numbers and management routes in Table 1 are merely examples provided in this application. The port number and the management route may be represented by using more or fewer bits, or the port number and the management route may be represented by using one or more of other types of numbers, letters, or symbols. This is not limited in this application.

In this example, the management device performs ranging through a physical fiber/cable, and then recommends a binding relationship (an optical fiber mapping relationship) between a logical optical fiber and a physical optical fiber based on distance similarity. The binding relationship may indicate a physical optical fiber corresponding to each logical optical fiber. Therefore, the management device establishes the optical fiber mapping relationship between a logical optical fiber and a physical optical fiber based on a selected reference optical fiber, to implement digital management of the physical fiber/cable in the optical network. This helps the management device quickly determine, based on the optical fiber mapping relationship, a faulty optical fiber corresponding to a faulty logical fiber, and improves optical fiber fault location efficiency.

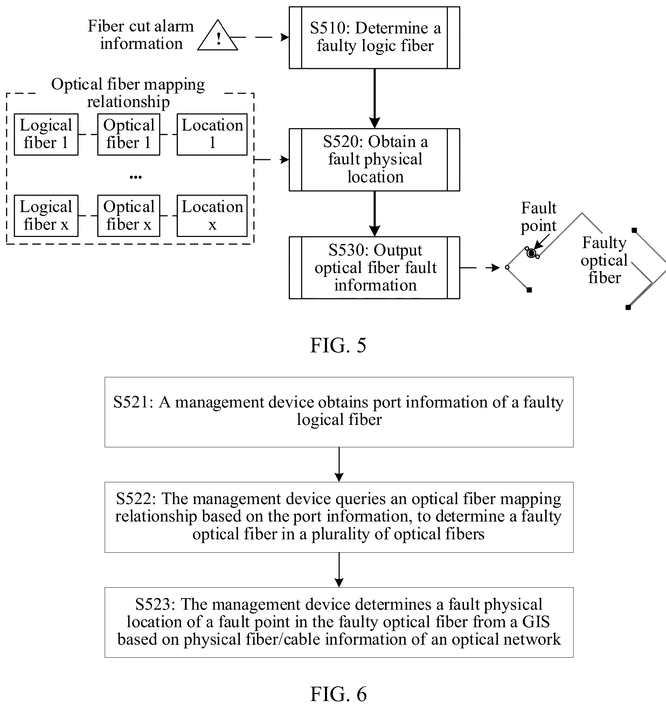

After obtaining the optical fiber mapping relationship of the optical network, the management device may locate a fault point in the optical network based on the optical fiber mapping relationship. As shown in FIG. 5, FIG. 5 is a schematic flowchart 2 of an optical fiber fault location method according to this application. The fault location method includes the following steps S510 to S530.

S510: A management device determines a faulty logical fiber in a plurality of logical fibers based on fiber cut alarm information.

As an optional implementation, the fiber cut alarm information may be obtained in the following manner: if the management device detects that a fiber cut fault occurs in an optical network, the management device indicates a plurality of OTDR modules to detect one or more relative locations of a fault point at which a fault occurs; and the management device generates the fiber cut alarm information based on the one or more relative locations and location information of the plurality of OTDR modules in the optical network.

For example, when a fiber/cable in the optical network is faulty, after detecting that the fiber cut fault occurs in the optical network, the management device may indicate the OTDR module to detect the relative location of the fault point at which the fault occurs, to generate the fiber cut alarm information based on the detected information. This avoids a process of manually querying for a faulty logical fiber, and helps improve efficiency of fault location.

S520: The management device determines a faulty optical fiber based on an optical fiber mapping relationship and the faulty logical fiber, and obtains a fault physical location of a fault point in the faulty optical fiber based on ranging information.

The faulty optical fiber is an optical fiber associated with the faulty logical fiber in the plurality of optical fiber. The fault point is a location that is in an optical fiber pre-buried in the optical network and at which the fault occurs. The ranging information indicates the relative location of the fault point in the faulty optical fiber.

For a process in which the management device obtains a fault physical location, this application provides a possible specific implementation. As shown in FIG. 6, FIG. 6 is a schematic flowchart 3 of an optical fiber fault location method according to this application. A process in which a management device obtains a fault physical location may include the following steps S521 to S523.

S521: The management device obtains port information of a faulty logical fiber.

The port information indicates a port number of a faulty logical fiber and a communication device connected to the faulty logical fiber. For example, the port number indicates sequence numbers of ports at two ends of the faulty logical fiber, and each logical fiber may be marked by using a group of port numbers (for example, two port numbers: L001 and L002).

The communication device connected to the faulty logical fiber may be an electronic device configured to implement a function of a network element in an optical network, a communication node configured to perform a data transmission function, or the like. This is not limited in this application. With reference to Table 1, for example, a communication device corresponding to the port number L001 of the logical fiber 1 is a device 1, and a communication device corresponding to the port number L002 of the logical fiber 1 is a device 2.

S522: The management device queries an optical fiber mapping relationship based on the port information, to determine a faulty optical fiber in a plurality of optical fibers.

For a process of obtaining the optical fiber mapping relationship, refer to related content in FIG. 3. For a possible implementation of the optical fiber mapping relationship, refer to descriptions in FIG. 4 and Table 1. Details are not described herein again.

For example, with reference to Table 1, if the faulty logical fiber is the logical fiber 1, the management device queries the fiber mapping relationship based on the port numbers (L001 and L002) of the logical fiber 1, and determines that the faulty optical fiber is the optical fiber 1.

S523: The management device determines a fault physical location of a fault point in the faulty optical fiber from a GIS based on physical fiber/cable information of the optical network.

For more content of the physical fiber/cable information, refer to related descriptions in FIG. 2. Details are not described herein again.

The GIS is a technical system that collects, stores, manages, calculates, analyzes, displays, and describes geographic distribution data of the entire or a part of earth surface (including the atmosphere) space with support of a computer hardware system and a computer software system. A simple longitude coordinate and a simple latitude coordinate can be identified and understood by a user only when being placed in specific geographic information and representing a location, a mark, or an orientation. After obtaining location information by using a related technology, the user needs to learn about a geographical environment, and query and analyze environment information, to provide information support and a service for a user activity.

In this embodiment, in a process of determining the physical location of the fault point, the management device may identify the faulty optical fiber based on the port information of the faulty logical fiber. Therefore, the management device determines the fault physical location of the fault point in the faulty optical fiber based on the physical fiber/cable information of the optical network, and implements automatic jumping, to the fault physical location of the fault point, from the faulty logical fiber indicated by a fiber cut alarm. This reduces a process of manual ranging and optical fiber checking, improves efficiency of fault location, helps decrease communication recovery time of the optical network, and improves data communication efficiency of the optical network.

Still refer to FIG. 5. The fault location method provided in this embodiment further includes the following S530.

S530: The management device outputs optical fiber fault information of the optical network.

In a possible implementation, the optical fiber fault information includes the fault physical location.

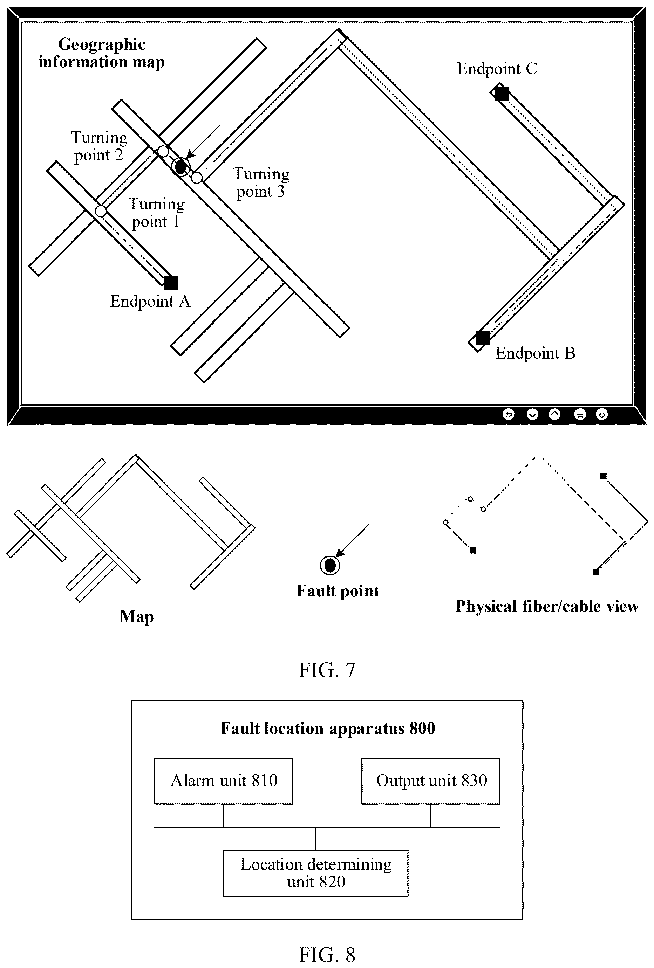

In a feasible example, the management device may display a geographic information map. The geographic information map includes the foregoing fault physical location. An identifier of the fault physical location indicates the fault point in the faulty optical fiber. As shown in FIG. 7, FIG. 7 is a diagram of displaying optical fiber fault information according to this application. In FIG. 7, a physical fiber/cable view is displayed on the basis of a map provided by a GIS. The physical fiber/cable view indicates a connection relationship of a plurality of optical fibers pre-buried in an optical network, and a fault physical location of a fault point is marked on the basis of the physical fiber/cable view, as shown by an arrow in FIG. 7. In this example, when an alarm occurs in the optical network, a management device obtains a device correspondingly connected to a faulty logical fiber and a port number of the device, queries an optical fiber mapping relationship, jumps to an optical fiber management GIS topology, and accurately locates a corresponding optical fiber. This improves efficiency of fault location.

For example, the management device may display logical optical fiber topology information of the optical network (referring to FIG. 4), jump to the physical fiber/cable view in FIG. 7 after determining the faulty optical fiber based on fiber cut alarm information, and after combining the physical fiber/cable view with the map provided by the GIS, determine a geographic information map including the fault physical location.

In another possible implementation, the optical fiber fault information includes a faulty optical fiber.

In a feasible example, the management device may display a faulty optical fiber list. The faulty optical fiber list includes at least one of link information of the faulty optical fiber and the fault physical location, and the link information indicates the fault physical location.

For example, the management device displays the faulty optical fiber list, jumps to the physical fiber/cable view (as shown in FIG. 7), and after combining the physical fiber/cable view with the map provided by the GIS, determines the geographic information map including the fault physical location.

In still another possible implementation, the optical fiber fault information includes the fault physical location and a faulty optical fiber.

In a feasible example, the management device may display the foregoing geographic information map and the faulty optical fiber list at the same time. Details are not described herein.

In this application, the management device displays a physical location of the fault point in a visualized manner, to accurately indicate a user to quickly repair the fault point of the faulty optical fiber, so as to avoid a delay caused by manual checking of the faulty optical fiber. This helps improve fault recovery efficiency of the optical network and improve communication stability of the optical network.

In conclusion, the management device may determine the faulty logical fiber in the optical network based on the fiber cut alarm information of the optical network. Further, the management device determines, based on the optical fiber mapping relationship of the optical network, a physical location of the faulty optical fiber corresponding to the faulty logical fiber, and outputs the physical location. In this way, a process of manually checking a drawing based on the faulty logical fiber to determine the faulty optical fiber corresponding to the faulty logical fiber is avoided, and a process of manually detecting the physical location of the faulty optical fiber on site is avoided. This helps reduce fault recovery time of the optical network and improve optical fiber fault location efficiency in the optical network.

When this application is applied to an end to end (end to end, E2E) scenario, the management device automatically associates a logical resource (logical fiber) and a physical resource (physical optical fiber) of the optical network, and when receiving fiber cut alarm information, the management device locates a physical location (as shown in FIG. 7) of a fault point in the physical optical fiber based on the fiber cut alarm information, and applies the physical location of the fault point to a construction and recovery process of the optical network. The management device can present the physical fiber/cable view and the physical location of the fault point on the map based on the fiber cut alarm information, to guide construction and recovery of the optical network. This avoids a process of manual on-site exploration and detection. In this way, mean time to repair (mean time to repair, MTTR) of the optical network shortened from several hours to several days to several seconds or minutes. This greatly reduces time for fault location of the optical fiber and helps improve communication recovery efficiency of the optical network. In some cases, the MTTR may also be referred to as the time for fault location of the optical fiber.

It should be noted that, because the management device associates the logical resource and the physical resource of the optical network (for example, the foregoing optical fiber mapping relationship), fiber/cable management based on a digital twin is implemented. In terms of management granularity, the management device can manage both a traditional logical fiber/cable (including a logical optical fiber) and a physical fiber/cable (for example, detailed information such as a pipe direction, a geographical location, a length, and a coiled fiber length), and bind the logical fiber/cable and the physical fiber/cable. In this way, a complete mapping from the physical world to virtual objects is truly achieved. In terms of fault reporting precision, a specific geographical location for construction and emergency repair can be accurately located with reference to ranging information (or referred to as detection information or measurement information) provided by a built-in OTDR module of a device in the optical network and a complete virtual-physical mapping model (pipeline route, turning point, length, coiled fiber length, longitude and latitude of each fiber/cable segment, and physical and logical mapping relationship). No manual checking is required, no manual onsite exploration is required, and zero-wait fault O&M of the optical fiber is achieved.

It may be understood that the fault location method provided in this application may be further applied to a fiber to the curb (Fiber to The Curb, FTTC) scenario, a fiber to the building (fiber to the building, FTTB) scenario, a fiber to the home (fiber to the home, FTTH) scenario, an optical transport network (optical transport network, OTN) scenario, or the like. For beneficial effect that can be achieved by the method, refer to the descriptions in the foregoing embodiments. Details are not described herein again.

To implement the functions in the foregoing embodiments, the management device includes a corresponding hardware structure and/or software module for performing each function. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

FIG. 8 is a diagram 1 of a structure of an optical fiber fault location apparatus according to this application. The fault location apparatus 800 may be configured to implement functions of the management device, the management and control unit, or the network element in the foregoing method embodiment, and therefore can also implement beneficial effect of the foregoing method embodiment. In this embodiment, the fault location apparatus 800 may be the optical receiving apparatus shown in FIG. 1, or the management device in the foregoing method embodiment, or the management system, the management and control unit 210, or the network element 220 provided in FIG. 2, or may be a module (for example, a chip) used in a management device.

As shown in FIG. 8, the fault location apparatus 800 includes: an alarm unit 810, a location determining unit 820, and an output unit 830. The alarm unit 810 is configured to determine a faulty logical fiber in a plurality of logical fibers based on fiber cut alarm information. The location determining unit 820 is configured to: determine a faulty optical fiber based on an optical fiber mapping relationship and the faulty logical fiber, and obtain a fault physical location of a fault point in the faulty optical fiber based on ranging information. The optical fiber mapping relationship includes an association relationship between the plurality of logical fibers and a plurality of pre-buried optical fibers, the faulty optical fiber is an optical fiber that is in the plurality of optical fibers and that is associated with the faulty logical fiber, and the ranging information indicates a relative location of the fault point in the faulty optical fiber. The output unit 830 is configured to output optical fiber fault information of an optical network, where the optical fiber fault information includes at least one of the fault physical location and the faulty optical fiber.

Optionally, locations of the plurality of optical fibers are determined based on physical fiber/cable information. The physical fiber/cable information includes at least one or a combination of coordinate information of each optical fiber in the plurality of pre-buried optical fibers, a pipeline form, a segmented fiber/cable length, a coiled fiber length, and a turning point location, and the coordinate information includes source coordinates and sink coordinates of each optical fiber.

Optionally, the optical fiber mapping relationship indicates a reference optical fiber of each logical fiber in the plurality of logical fibers. The plurality of optical fibers include the reference optical fiber of each logical fiber, the reference optical fiber of each logical fiber is one of at least one candidate optical fiber determined based on a length of each logical fiber and the physical fiber/cable information, and a difference between the length of each logical fiber and a length of the at least one candidate optical fiber is less than or equal to a specified threshold.

Optionally, the optical network includes an OTDR module. The OTDR module is configured to detect a relative distance between the fault point and the OTDR module. A location of the faulty optical fiber, a location of the OTDR module, and the relative distance are used to determine the fault physical location of the fault point. The foregoing ranging information includes the relative distance.

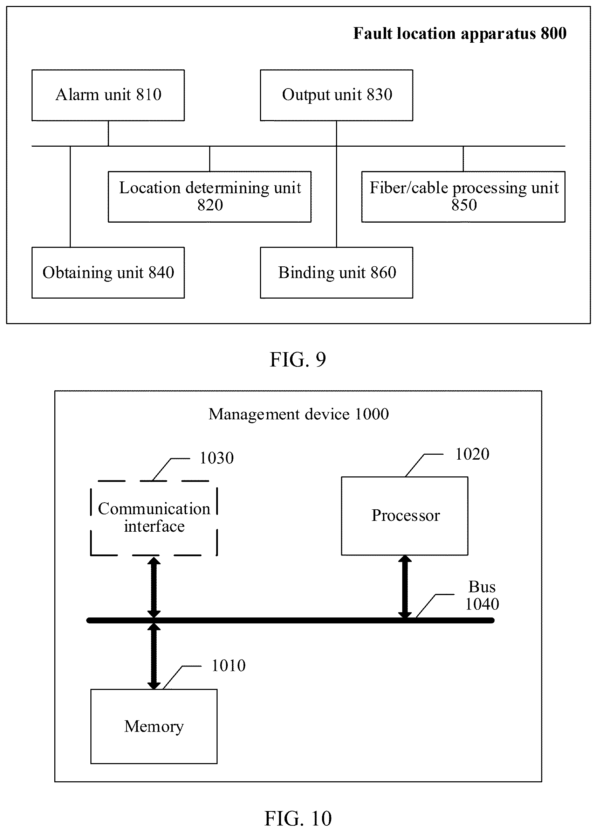

Optionally, as shown in FIG. 9, FIG. 9 is a diagram 2 of a structure of an optical fiber fault location apparatus according to this application. The fault location apparatus 800 provided in this application further includes an obtaining unit 840, a fiber/cable processing unit 850, and a binding unit 860. The obtaining unit 840 is configured to obtain physical fiber/cable information of an optical network. The fiber/cable processing unit 850 is configured to generate physical routes of a plurality of optical fibers based on the physical fiber/cable information. The binding unit 860 is configured to establish an optical fiber mapping relationship between the physical routes of the plurality of optical fibers and a plurality of logical fibers according to a preset rule.

Optionally, the binding unit 860 is specifically configured to: for each logical fiber in the plurality of logical fibers, obtain at least one candidate optical fiber of each logical fiber based on the physical routes of the plurality of optical fibers, and select, from the at least one candidate optical fiber as a reference optical fiber of each logical fiber, a candidate optical fiber that matches each logical fiber; and establish an optical fiber mapping relationship between the plurality of logical fibers and reference optical fibers of the logical fibers. A difference between a length of the at least one candidate optical fiber and a length of each logical fiber is less than or equal to a specified threshold.

Optionally, the output unit 830 includes: a displaying unit, configured to display a geographic information map, where the geographic information map includes the fault physical location, and an identifier of the fault physical location indicates the fault point in the faulty optical fiber; or a displaying unit, configured to display a faulty optical fiber list. The faulty optical fiber list includes at least one of link information of the faulty optical fiber and the fault physical location, and the link information indicates the fault physical location.

Optionally, the optical network includes a plurality of OTDR modules, and each OTDR module is configured to detect a relative distance between a fault point at which a fault occurs and each OTDR module. The fault location apparatus provided in this application further includes a control unit, configured to: if it is detected that a fiber cut fault occurs in the optical network, indicate the plurality of OTDR modules to detect one or more relative locations of the fault point at which the fault occurs. The alarm unit 810 is configured to generate fiber cut alarm information based on the one or more relative locations and location information of the plurality of OTDR modules in the optical network.

Optionally, the location determining unit 820 is specifically configured to obtain port information of the faulty logic fiber, where the port information indicates a port number of the faulty logic fiber and a communication device connected to the faulty logic fiber. The location determining unit 820 is further specifically configured to: query the optical fiber mapping relationship based on the port information, to determine the faulty optical fiber in the plurality of optical fibers; and determine the fault physical location of the fault point in the faulty optical fiber from a ground information system GIS based on the physical fiber/cable information of the optical network, where the physical fiber/cable information includes at least one or a combination of coordinate information of each optical fiber in a plurality of pre-buried optical fibers, a pipeline form, a segmented fiber/cable length, a coiled fiber length, and a turning point location, and the coordinate information includes source coordinates and sink coordinates of each optical fiber.

For more detailed descriptions of the foregoing fault location apparatus 800, directly refer to related descriptions of the management device in the method embodiment shown in the foregoing accompanying drawings. Details are not described herein again.

When the fault location apparatus implements, by using software, the fault location method shown in any one of the foregoing accompanying drawings, the fault location apparatus and units thereof may also be software modules. A processor invokes the software module sto implement the foregoing fault location method. The processor may be a central processing unit (central processing unit, CPU), an application-specific integrated circuit (application-specific integrated circuit, ASIC) implementation, or a programmable logic device (programmable logic device, PLD). The PLD may be a complex programmable logical device (complex programmable logical device, CPLD), a field programmable gate array (field programmable gate array, FPGA), generic array logic (generic array logic, GAL), or any combination thereof. For more detailed descriptions of the fault location apparatus, refer to related descriptions in embodiments shown in the accompanying drawings. Details are not described herein again.

When the fault location apparatus is implemented by using hardware, the hardware may be implemented by using a processor or a chip. The chip includes an interface circuit and a control circuit. The interface circuit is configured to: receive data from another device other than the processor and transmit the data to the control circuit, or send data from the control circuit to another device other than the processor.

The control circuit and the interface circuit are configured to implement, by using a logic circuit or by executing code instructions, the method according to any one of the possible implementations of the foregoing embodiments. For beneficial effect, refer to descriptions of any aspect of foregoing embodiments. Details are not described herein again.

It may be understood that the processor in embodiments of this application may be a CPU, a neural-network processing unit (neural processing unit, NPU), a graphics processing unit (graphics processing unit, GPU), another general-purpose processor, a digital signal processor (digital signal processor, DSP), an ASIC, an FPGA, another programmable logic device, a transistor logic device, a hardware component, or any combination thereof. The general purpose processor may be a microprocessor or any regular processor or the like.

In addition, the fault location apparatus 800 shown in FIG. 8 and the fault location apparatus 800 shown in FIG. 9 may alternatively be implemented by using a management device. As shown in FIG. 10, FIG. 10 is a diagram of a structure of a management device according to this application. The management device 1000 includes a memory 1010 and at least one processor 1020. The processor 1020 may implement the fault location method provided in the foregoing embodiments. The memory 1010 is configured to store a software instruction corresponding to the fault location method. In an optional implementation, in a hardware implementation, the management device 1000 may be a chip or a chip system in which one or more processors 1020 are packaged. For example, when the management device 1000 is configured to implement the method steps in the foregoing embodiments, the processor 1020 included in the management device 1000 performs the steps in the foregoing methods and possible substeps of the steps. In an optional case, the management device 1000 may further include a communication interface 1030, and the communication interface 1030 may be configured to: receive and send data. For example, the communication interface 1030 is configured to receive fiber cut alarm information, or send optical fiber fault information. The communication interface 1030 may be implemented by using an interface circuit included in the management device 1000.

In this embodiment of this application, the communication interface 1030, the processor 1020, and the memory 1010 may be connected through a bus 1040. The bus 1040 may be classified into an address bus, a data bus, a control bus, or the like. The bus 1040 may be a peripheral component interconnect express (Peripheral Component Interconnect Express, PCIe) bus, an extended industry standard architecture (extended industry standard architecture, EISA) bus, a unified bus (unified bus, Ubus or UB), a compute express link (compute express link, CXL) bus, a cache coherent interconnect for accelerators (cache coherent interconnect for accelerators, CCIX) bus, or the like.

It should be noted that the management device 1000 may further perform a function of the fault location apparatus 800 shown in FIG. 8 or FIG. 9. Details are not described herein again. For example, the management device 1000 may be a server, a network device, or a data center including a plurality of servers.

The method steps in embodiments may be implemented in a hardware manner, or may be implemented by executing software instructions by a processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in the management device. Certainly, the processor and the storage medium may alternatively exist as discrete components in the network device or the terminal device.

This application further provides a chip system. The chip system includes a processor, configured to implement a function of a data processing unit in the foregoing method. In a possible design, the chip system further includes a memory, configured to store program instructions and/or data. The chip system may include a chip, or may include a chip and another discrete component.

All or some of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid state drive (solid state drive, SSD).

The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. An optical fiber fault location method, wherein the method comprises:
determining a faulty logical fiber in a plurality of logical fibers based on fiber cut alarm information;
determining a faulty optical fiber based on an optical fiber mapping relationship and the faulty logical fiber, and obtaining a fault physical location of a fault point in the faulty optical fiber based on ranging information, wherein
the optical fiber mapping relationship comprises an association relationship between the plurality of logical fibers and a plurality of pre-buried optical fibers, wherein the faulty optical fiber is an optical fiber that is in the plurality of optical fibers and that is associated with the faulty logical fiber, and the ranging information indicates a relative location of the fault point in the faulty optical fiber; and
outputting optical fiber fault information of an optical network, wherein the optical fiber fault information comprises at least one of the fault physical location and the faulty optical fiber.

2. The method according to claim 1, wherein outputting the optical fiber fault information of the optical network comprises:
displaying a geographic information map, wherein the geographic information map comprises the fault physical location, and an identifier of the fault physical location indicates the fault point in the faulty optical fiber.

3. The method according to claim 1 or 2, wherein outputting the optical fiber fault information of the optical network comprises:
displaying a faulty optical fiber list, wherein the faulty optical fiber list comprises at least one of the fault physical location and link information of the faulty optical fiber, and the link information indicates the fault physical location.

4. The method according to any one of claims 1 to 3, wherein locations of the plurality of optical fibers are determined based on physical fiber/cable information, the physical fiber/cable information comprises at least one or a combination of coordinate information of each optical fiber in the plurality of pre-buried optical fibers, a pipeline form, a segmented fiber/cable length, a coiled fiber length, and a turning point location, and the coordinate information comprises source coordinates and sink coordinates of each optical fiber.

5. The method according to claim 4, wherein the optical fiber mapping relationship indicates a reference optical fiber of each logical fiber in the plurality of logical fibers, the plurality of optical fibers comprise the reference optical fiber of each logical fiber, the reference optical fiber of each logical fiber is one of at least one candidate optical fiber determined based on a length of each logical fiber and the physical fiber/cable information, and a difference between the length of each logical fiber and a length of the at least one candidate optical fiber is less than or equal to a specified threshold.

6. The method according to any one of claims 1 to 5, wherein the optical network comprises an optical time-domain reflectometer OTDR module, and the OTDR module is configured to detect a relative distance between the fault point and the OTDR module; and
a location of the faulty optical fiber, a location of the OTDR module, and the relative distance are used to determine the fault physical location of the fault point, and the ranging information comprises the relative distance.

7. An optical fiber fault location apparatus, wherein the apparatus comprises:
an alarm unit, configured to determine a faulty logical fiber in a plurality of logical fibers based on fiber cut alarm information;
a location determining unit, configured to determine a faulty optical fiber based on an optical fiber mapping relationship and the faulty logical fiber, and obtaining a fault physical location of a fault point in the faulty optical fiber based on ranging information, wherein
the optical fiber mapping relationship comprises an association relationship between the plurality of logical fibers and a plurality of pre-buried optical fibers, wherein the faulty optical fiber is an optical fiber that is in the plurality of optical fibers and that is associated with the faulty logical fiber, and the ranging information indicates a relative location of the fault point in the faulty optical fiber; and
an output unit, configured to output optical fiber fault information of an optical network, wherein the optical fiber fault information comprises at least one of the fault physical location and the faulty optical fiber.

8. The apparatus according to claim 7, wherein the output unit comprises:
a displaying unit, configured to display a geographic information map, wherein the geographic information map comprises the fault physical location, and an identifier of the fault physical location indicates the fault point in the faulty optical fiber.

9. The apparatus according to claim 7 or 8, wherein the output unit comprises:
a displaying unit, configured to display a faulty optical fiber list, wherein the faulty optical fiber list comprises at least one of the fault physical location and link information of the faulty optical fiber, and the link information indicates the fault physical location.

10. The apparatus according to any one of claims 7 to 9, wherein locations of the plurality of optical fibers are determined based on physical fiber/cable information, the physical fiber/cable information comprises at least one or a combination of coordinate information of each optical fiber in the plurality of pre-buried optical fibers, a pipeline form, a segmented fiber/cable length, a coiled fiber length, and a turning point location, and the coordinate information comprises source coordinates and sink coordinates of each optical fiber.

11. The apparatus according to claim 10, wherein the optical fiber mapping relationship indicates a reference optical fiber of each logical fiber in the plurality of logical fibers, the plurality of optical fibers comprise the reference optical fiber of each logical fiber, the reference optical fiber of each logical fiber is one of at least one candidate optical fiber determined based on a length of each logical fiber and the physical fiber/cable information, and a difference between the length of each logical fiber and a length of the at least one candidate optical fiber is less than or equal to a specified threshold.

12. The apparatus according to any one of claims 7 to 11, wherein the optical network comprises an optical time-domain reflectometer OTDR module, and the OTDR module is configured to detect a relative distance between the fault point and the OTDR module; and
a location of the faulty optical fiber, a location of the OTDR module, and the relative distance are used to determine the fault physical location of the fault point, and the ranging information comprises the relative distance.

13. A management device, comprising:
a memory, configured to store computer instructions; and
a processor, configured to invoke the computer instructions to implement the method according to any one of claims 1 to 6.

14. A communication system, comprising a plurality of pre-buried optical fibers and the management device according to claim 13.

15. A computer-readable storage medium, wherein the computer-readable storage medium stores a computer program, and when the computer program is executed by a management device, the method according to any one of claims 1 to 6 is implemented.
